# EUROPEAN PATENT APPLICATION

(11) **EP 0 969 687 A1**
(43) Date of publication of application: **05.01.2000**
(21) Application number: 98305266.3
(22) Date of filing: 02.07.1998
(51) Int. Cl.: H04Q 11/00, H04L 12/18, H04M 3/56, H04L 29/06, H04L 12/64

(54) **Internet based IP multicast conferencing and reservation system**

(71) Applicant: AT&T Corp., New York, NY 10013-2412 (US)
(72) Inventor: Civanlar, Seyhan, Red Bank, New Jersey 07701 (US); Dardashti, Mojgan, Tinton Falls, New Jersey 07724 (US); Saksena, Vikram R., Freehold, New Jersey 07728 (US)
(74) Representative: Asquith, Julian Peter

(57) **Abstract**

A web-based controlled interface for managing an internet protocol multicast session between a plurality of users. A user interface provides for the inputting of information to schedule a conference session and a network interface provides for the inputting of information corresponding to users participating in the conference. A database stores the conference scheduling information and the information corresponding to the users participating in the conference. An audio bridge manager receives instructions from the user interface and accesses information stored in the database for instructing an audio bridge to establish a telephone connection with the user participants. An IP multicast address is generated which is used to transmit multimedia information among the participants in the conference over an internet protocol mulitcast network (95).

## Description

### FIELD OF INVENTION

The present invention relates generally to internet communication systems and more particularly to a web-based interface for creating and managing an internet protocol multicast conference between a plurality of users.

### BACKGROUND

Presently, an Internet Protocol *IP* datapacket sent over an internetwork *internet* may have a unicast address used to transmit the packet from a source to a single recipient or a broadcast address used to send the packet from a source to an entire subnetwork. The unicast protocol is limited to one source and one recipient configuration. The broadcast transmission protocol sends the data packet to a recipient regardless of whether or not the recipient within the subnetwork wants to receive the packet with the number of receivers being limited by the amount of bandwidth available to the source.

IP Multicast Routing is an alternative to unicast and broadcast transmissions. Multicast Routing enables a source to deliver a single copy of a data packet to multiple recipients that have been configured as members of a multicast group either within the same subnetwork or across various subnetworks. The multicast backbone or *Mbone* is an interconnected set of subnetworks that supports the delivery of IP multicast traffic. The Mbone uses a group address, in a class D address format which ranges from 224.0.0.0 to 239.255.255.255 to fill the destination address field of an IP packet header to route the packet across networks. Once a user joins a particular multicast session, IP packet traffic is delivered to all members of the group by the network address infrastructure. By using the Mbone, only a single copy of a multicast message or data packet is sent over any node within a network. Copies of the message are made only where a transmission path diverges at a network router. In this manner, network transmission bandwidth is conserved.

In Multicast Routing, a *Group Membership Protocol* is used by the network routers to learn which users, attached to the router's subnetworks, belong to a particular Multicast session. A user transmits a group membership message notifying the network that the user wishes to receive IP traffic sent among participants in that particular group. In this manner, a user can initiate the process of connecting to a multicast group session thereby alleviating the initiator of the session from maintaining a list of participants. A drawback associated with current multicast sessions is that they are receiver based in that participants receive information from the group, but cannot perform collaborative or interactive tasks. Another disadvantage associated with current multicast transmission is that audio communication is subject to packet delays, echos and packet loss. Moreover, a multicast session is available to any user that obtains the Multicast address, thereby making security among participants almost impossible. In addition, currently a tool does not exist where users can access a web-based interface for scheduling a multicast session among a particular group of users which also provides an audio connection to only those users participating in the multicast conference session. Accordingly, there exists a need for an internet web-based interface, accessible to all users having a web-browser, for scheduling, managing, securing and maintaining an IP multicast session for use as a conferencing and application sharing tool.

### SUMMARY OF INVENTION

A system manages an internet protocol multicast network conferencing session where a plurality of users receive transmitted multimedia information. A network interface resident on a web-server manages a conferencing session. An interface accessible via a web-browser is adaptable to receiving information related to a conferencing session. An audio interface establishes an audio connection among the conferencing participants. A multicast interface transmits multimedia information via an internet protocol network.

### BRIEF DESCRIPTION OF DRAWINGS

Fig. 1 is a block diagram overview of a system in accordance with an embodiment of the present invention.

Fig. 2 is a flow chart illustrating an exemplary process of initiating a multicast session.

Fig. 3 is a flow chart illustrating an exemplary process of activating a multicast session.

Fig. 4 is a flow chart illustrating an exemplary process for a user joining an activated multicast session.

### DETAILED DESCRIPTION

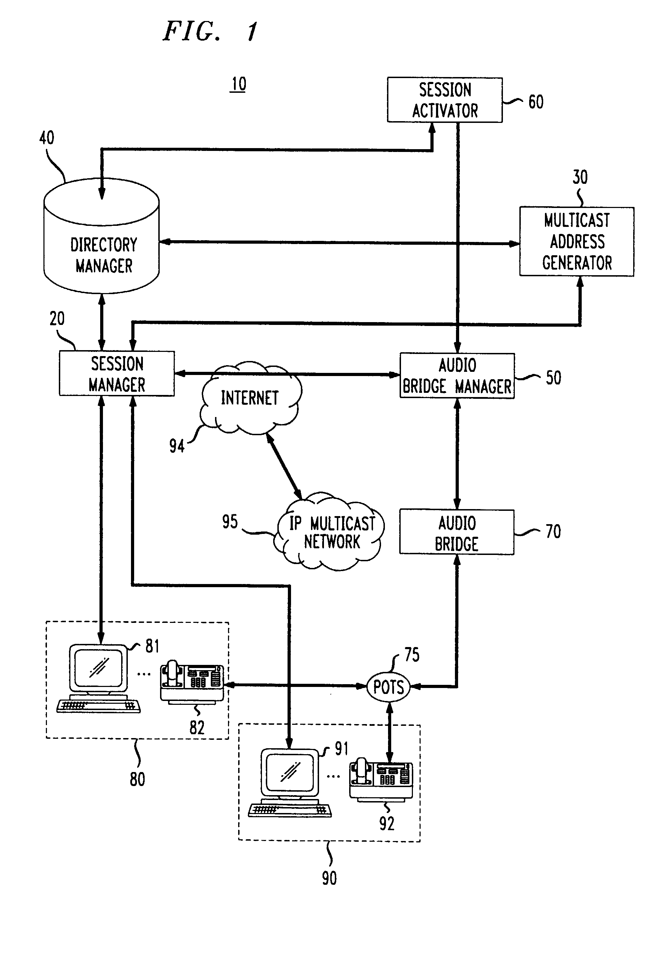

Referring to Fig. 1, the system 10 in accordance with the present invention employs a session manager 20, a multicast address generator 30, a directory manager 40, an audio bridge manager 50, a session activator 60, and an audio bridge 70 for setting-up, managing and participating in a multimedia session as well as allowing users to engage in multimedia Closed User Group (CUG) activities such as application sharing among a plurality of users. The system interconnects the internet 94 and IP multicast network 95 as well as the Plain Old Telephone System (POTS) network 75 to establish a multimedia session.

A multicast conferencing session is an interactive audio, video, and/or data session shared among a plurality of users. For the purposes of explanation, Fig. 1 references users 80 and 90, however it is understood that the present invention can establish a conferencing session with numerous participants not shown in Fig. 1. A session initiator or host 80 having a computer 81 and a phone 82 accesses the conferencing service web page via session manager 20 using their computer 81 to access an internet web browser to reserve a session. As a session participant, user 90 having a computer 91 and a telephone 92 also accesses the conferencing service web page via session manager 20 using computer 91. The *front-end* of the session manager 20 allows host 80 as well as participants, such as user 90, to be authenticated by the system for security purposes. At session reservation time, host 80 provides session manager 20, through accessing of an Hypertext Markup Language (HTML) page, with all information necessary to activate a session. This information may include title of the conferencing session, start time of the session, stop time of the session, duration of the session, repeat times of the session, number of ports or participants in the session, bandwidth required, media types to be employed, etc. These addresses are generated automatically by multicast address generator 30 based on the date, time, duration and repeat times entered by host 80. Alternatively, the IP multicast addresses needed to initiate and maintain the conferencing session, as well as ports required for different media types, can be entered manually by user 80 when initiating a conference using session manager 20. Multicast address generator 30 automatically generates an IP multicast address by retrieving the next unassigned address from a list of reserved multicast class D address blocks. The information received from host 80 is sufficient to create a Session Description Protocol (SDP) file. Once the session information is saved, a session ID and access code are returned to host 80 as the initiator of the conference. Profile data associated with host 80 can be retrieved from directory manager 40 to prepopulate certain fields when initiating a conferencing session. This profile information associated with host 80 may include name, e-mail address, telephone number, company name, etc. Once the session is scheduled, all data pertaining to the session is stored in directory manager 40 corresponding to a session ID generated uniquely by session manager 20 for that particular conference. In addition, once a session has been scheduled, host 80 can invite additional participants, such as user 90, via an alternative communication mechanism such as e-mail and/or phone, thereby notifying them of the session title, description, date, start time, stop time, session ID and most importantly, the session access code so that user 90 may access the conference. In this manner, session security is maintained since only participants with a valid session ID and access code can join a multicast conference.

To activate the audio portion of a conference, session activator 60 communicates with audio bridge manager 50 to set up a bridge conference accessible to participant 90 and host 80 based on the session ID retrieved from directory manager 40 for a particular conference. Session activator 60 includes a process that continuously queries directory manager 40 for the start dates and times as well as the repeat dates and times of the scheduled sessions and activates the session if it matches the current date and time. Participant 90 enters the session ID, access code, their name and phone number and session manager 20 validates that the entered information is correct. Session manager 20 then retrieves information associated with that particular conference session from directory manager 40. Session manager 20 communicates with audio bridge manager 50 to join participant 90 into the audio session corresponding to the particular session ID. Session manager 20 transmits the phone number of participant 90 to the audio bridge manager 50 which instructs audio bridge 70 to call phone 92 of participant 90 thereby completing the audio connection via a conventional POTS network 75. A similar process occurs with respect to phone 82 for host 80 and the completion of a host's audio connection.

Once a voice connection is established between participant 90 and audio bridge 70, an SDP file is dynamically created from information retrieved from directory manager 40 pertaining to the conferencing session. The SDP file is in a format that the viewer application understands and can process in order to provide a user with the multicast data. This information is returned to the web-browser used by participant 90 with the MIME Content-type *application/x-sdp.* This enables the automatic launching of a viewer application from the participants browser in a conventional manner.

Information transmission between session manager 20, multicast address generator 30, directory manager 40, audio bridge manager 50, and session activator 60 within the system can be through a Transmission Control Protocol/Internet Protocol (TCP/IP) socket connection over the internet, an Asynchronous Transfer Mode connection, a serial line connection, a standard modem or other similar transmission medium. Session manager 20 communicates with multicast address generator 30, directory manager 40, and audio bridge manager 50 through the use of a Common Gateway Interface (CGI) program residing on the web server. If multicast address generator 30, directory manager 40 or audio bridge manager 50, reside on a different machine than the web server, then communication between the components can be made from the CGI scripts to any remote mechanism such as Remote Procedure Call (RPC). Each CGI program parses parameters from the URL or a submitted form (using methods such as GET or POST) received from the user's browser.

As described briefly above, session manager 20 functions as an entry point to the conferencing system and a central point for managing, coordinating and communicating with other session participants. Session manager 20 resides on an internet web server making it broadly available to all internet users. Users 80 and 90 access an HTML page, which serves as a gateway to session manager 20, through a Web-browser on a user's desk-top computer. Host 80 schedules a particular conferencing session by inputting information via the HTML page.

Directory manager 40 consists of a database that includes various participant information associated with the scheduling of a particular conferencing session received from session manager 20. For example, stored information may include a participant's name, company, e-mail address, telephone number, telefax number, etc.. Directory manager 40 also stores multicast attributes associated with a particular conferencing session including a session ID, session title, session start time, session finish time, multicast range, media types and formats used within a session and corresponding IP multicast addresses and ports, quality of service information, bandwidth, as well as information corresponding to active conferencing sessions and their participants. This information is received from the initiator of the session via session manager 20. The architecture associated with directory manager 40 is implemented based on a mechanism for internet users to query and manage an arbitrary database of hierarchial attribute/value pairs such as the Lightweight Director Access Protocol (LDAP) as described in *What is a Directory Service? and What is LDAP,* from the SLAPD and SLURPE Administrators Guide, University of Michigan, Release 3.3, April 30, 1996. Alternatively, data stored in directory manager 40 could also be stored in a commercial database and retrieved.

Session manager 20 accesses the information stored in directory manager 40 through the use of CGI scripts. Various tools are available to accomplish this task, for example, Rogue Wave dbTools.h++ and tools.h++libraries to make database calls from C++ CGI scripts. Alternatively, new information can be added to the database in directory manager 40 as well as updating and deleting existing information through ESQL commands or other tools performed by a coordinator or supervisor with special access privileges. Each conference session as well as its attributes are queried using a session ID as the primary key. The session subscribers register with directory manager 40 prior to the initiation of the conference session. Alternatively, a conferee can register themselves or other conferees with directory manager 40 at the time of initiating a conference session. Table 1 shows exemplary subscriber information stored in a database of directory manager 40.

**Table 1**

| Participant Name | User ID | Password | Participant IP Address | Participant e-mail | Participant Phone No. |
|---|---|---|---|---|---|
| Jane Doe | JAD | ####### | 135.15.15.235 | jd@inc.com | ### ###-#### |
| John Doe | JOD | ####### | 135.16.45.123 | jdoe@any.com | ### ###-#### |

Audio bridge manager 50 receives instructions regarding the multicast conference session from session manager 20. Audio bridge manager 50 is connected to audio bridge 70 through a communications protocol such as DATAKIT and contains all the API's to communicate status and control to audio bridge 70. Audio bridge manager 50 shares the same database with session manager 20 and accesses all necessary participant session information. Communication between session manager 20 and audio bridge manager 50 are implemented via RPC where procedure calls are made across the network using CGI scripts. In this manner, all status changes, for example a participant terminating its POTS connection, are communicated from the audio bridge 70 to audio bridge manager 50 where HTML screens get updated dynamically in session manager 20 via server push technology. The web server dynamically updates data to the browser without the browser explicitly requesting to receive the data. At conference session activation time, an audio session gets activated on audio bridge 70 through communication between session manager 20 and audio bridge manager 50. An IP multicast application server resident in multicast network 95 starts transmitting audio, video or data to the IP multicast addresses specified at session reservation or activation time. In order for host 80 and participant 90 to receive IP multicast traffic they must access a multicast enabled router. If user 80 and/or participant 90 are not connected to a multicast enabled router, they must be connected to a gateway server which communicates with a multicast enabled router in order for the end user to be able to receive multicast traffic. Audio bridge manager 50 can reside on either the same web-server machine where session manager 20 resides or it may also reside on a different machine.

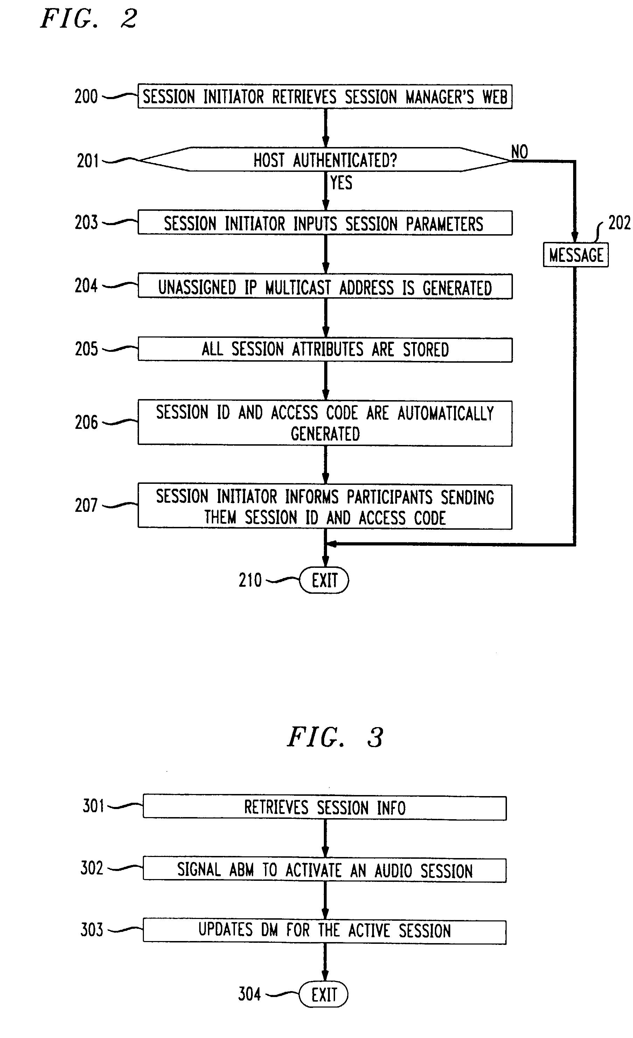

Fig. 2 is a flow chart illustrating an exemplary process of initiating a multicast session and inviting participants to the session using the system described with reference to Fig. 1. The process begins at step 200 when the session initiator or host 80 accesses the web-based interface via session manager 20 using their web-browser. Host 80 inputs relevant session information which is authenticated by the system at step 201 based on a user password authentication process. If authentication fails, an error message is sent to host 80's web-browser at step 202 and the process exits at step 210. If authentication at step 201 is confirmed, the process continues to step 203 where host 80 requests to reserve a multicast session and is provided with an HTML page to schedule a conference. The host 80 inputs the conferencing session parameters as described above, which are necessary to initiate the conferencing session at step 203. In step 204, the session manager 20 communicates with the multicast address generator 30 transmitting the session's scheduled date, start time, and stop time. An IP multicast address from the multicast address generator 30 is also received by user 80 at step 204. In step 205 all data relevant to the conferencing session is stored in directory manager 40 and associated with the unique session ID generated by session manager 20 in step 204. At step 206, host 80 is provided with the unique session ID and access code generated automatically by the session manager 20. At step 207, session access information along with the relevant user information such as the date and time of the conference is transmitted to participant 90 via session manager 20. Alternatively, the initiating user can notify participant 90 as well as other participants via some other communication mechanism such as E-mail or phone.

Fig. 3 illustrates an exemplary process of session activation using the system described with reference to Fig. 1. The session is activated by session activator 60 at the date and time entered during conference scheduling. In step 301, session activator 60 obtains the previously stored information for the particular conferencing session from directory manager 40. Session activator 60 notifies audio bridge manager 50 through RPC calls to the audio bridge manager 50 from CGI scripts to activate a new audio session on the audio bridge 70 associated with the particular session ID at step 302. In step 303 session activator 60 notifies directory manager 40 to update the status of the present conference session to active. The process then exits at step 304.

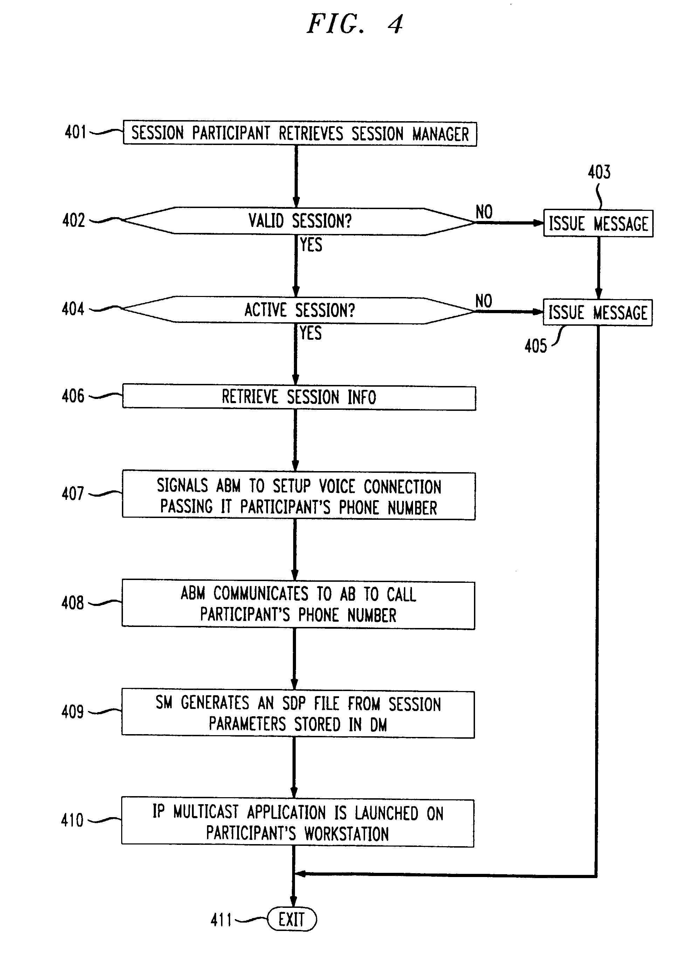

Fig. 4 illustrates a flow chart of an exemplary process of participant 90 joining an activated multicast session using the system described with reference to Fig. 1. Participant 90 accesses session manager 20 through a web browser. Participant 90 inputs their user name and password to get authenticated by the system. At step 401, participant 90 requests to join a conferencing session and thereby retrieves an HTML page to enter the session ID and access code. At conditional branch 402, session manager 20 attempts to authenticate the user information by querying directory manager 40 to validate the session ID and access code provided by the participant at step 401. If validation fails at step 402, an error message is provided to participant 90 at step 403 and session manager 20 denies access to participant 90. If a session is valid, the process continues to step 404 where another conditional branch is performed to determine if the session authenticated at step 402 is currently active. This active session conditional branch is performed by session manager 20 calling an API on audio branch manager 50 to check whether the session is active. If the conferencing session is not active, an error message is provided to the user at step 405 and the process exits at step 411.

If the conditional branch at step 404 is satisfied and the session is determined to be active, session manager 20 retrieves the information associated with that particular session from directory manager 40 at step 406. In step 407, session manager 20 calls a CGI script on the web-server used by participant 90 which begins communication with audio bridge manager 50 through RPC and sends the audio bridge manager 50 the phone number of participant 90 by calling appropriate API's. The voice connection for participant 90 is established through audio bridge manager 50 communicating with audio bridge 70 to call telephone 91 associated with participant 90 using bridge interfaces at step 408. Once participant 90 has successfully joined the audio session, session manager 20 generates an SDP file based on the data retrieved from the directory manager 40 with MIME Content-type *application/x-sdp* and sends the file back to the web-browser used by participant 90 at step 409. In step 410, the web-browser associated with participant 90 launches an IP multicast viewer application upon receiving the SDP file allowing participant 90 to join the multicast session at the IP multicast address specified in the SDP file. Participant 90 receives the multicast data transmitted among the session users. This viewer application can be configured as a plug in or a helper application in the participant's browser.

A participant may leave the session at any time, where they will be dropped from the POTS network 75 audio connection with API calls made to audio bridge manager 50 by session manager 20 and the viewer application is terminated at which point the process exits at step 411. Alternatively, the session may be terminated at the indicated stop time of the scheduled session originally entered by host 80 or can be terminated by the host at any time.

Through the use of a web based controlled interface, a multicast conference session is created and managed among a number of participants. A unique session ID and access code ensures a closed user group enforcing access restrictions for conferencing security. An audio bridge manager coordinates communication among participants using an audio bridge to establish an audio connection using the POTS network. In this manner a multicast session can be established among a particular group of users which provides an audio connection to those users participating in the multicast conference session. The multicast conferencing system in accordance with the present invention utilizes a user interface and a network interface. The user interface allowing a participant to set up a multicast session while the network interface retrieves information from appropriate user databases.

## Claims

1. An apparatus for managing interactive conferencing among a plurality of users using an internet protocol multicast network comprising:
a network interface resident on an internet web-server for managing said conferencing session;
a user interface, accessible via an internet web-browser, communicating with said user interface, adaptable to receiving information related to a conferencing session;
an audio interface receiving instructions from said user interface and establishing an audio connection among said plurality of users; and
a multicast interface receiving instructions from said user interface and transmitting multimedia information via said internet protocol multicast network among said plurality of users participating in said conference.

2. The apparatus of claim 1 wherein said user interface is resident on an internet web-server and adaptable to retrieving scheduling information corresponding to said conference.

3. The apparatus of claim 1 further including a database for storing information pertaining to said plurality of users.

4. The apparatus of claim 1 wherein said audio interface includes an audio bridge manager for receiving and processing said instructions received from said user interface.

5. The apparatus of claim 4 wherein said audio interface includes an audio bridge for establishing said audio connection with said plurality of users.

6. The apparatus of claim 1 wherein said user interface includes a hypertext markup language page.

7. The apparatus of claim 1 wherein said user interface generates a session identification code unique to a particular conferencing session.

8. The apparatus of claim 1 wherein said user interface generates a session access code communicated to said users for accessing said conferencing session.

9. The apparatus of claim 1 wherein said multicast interface communicates with said multicast network via a session description protocol file.

10. The apparatus of claim 1 wherein said multicast interface generates a multicast address for transmitting said multimedia information among said users during said conferencing session.

11. A system for multimedia conferencing among a plurality of users using an internet protocol multicast network comprising: a user interface resident on an internet web-server for inputting information corresponding to a scheduled conference, said interface accessible to said plurality of users; a network interface resident on an internet web-server for inputting information corresponding to a plurality of users participating in said conference session; a database storing said information corresponding to said scheduled conference and said information corresponding to said plurality of users participating in said conference, said database accessible by said user interface to verify conference information; an audio bridge manager communicating with said user interface and accessing information stored in said database; an audio bridge communicating with said audio bridge manager and initiating a telephone connection with said plurality of users based on instruction received from said user interface; and
an address generator for generating an IP multicast address used to transmit multimedia traffic among said plurality of users participating in said conference.

12. The system of claim 11 wherein said audio bridge dials a telephone number associated with each of said users participating in said conference.

13. The system of claim 11 wherein said information corresponding to said plurality of users participating in said conference session includes an internet address associated with each of said users.

14. The system of claim 11 wherein said information stored in said database is accessed using common gateway interface scripts.

15. The system of claim 11 wherein each of said users receive said multicast traffic via a multicast enabled router.

16. The system of claim 11 further including a gateway server connected to a multicast enabled router, said users connected to said gateway server for receiving said multicast traffic.

17. A method for managing an interactive internet protocol multicast conferencing session comprising:
accessing a user interface via an internet web-browser; inputting information relating to said conferencing session and user conference participants using said user interface; storing in a database said information relating to said conferencing session and said conference participants; generating an internet protocol multicast address associated with said conferencing session; and activating a multicast session corresponding to said multicast address for transmitting multimedia information over an internet protocol multicast network to said conference participants.

18. The method of claim 17 further including the step of authenticating said information corresponding to scheduling of said conference session.

19. The method of claim 17 further including the step of establishing an audio connection with said conference participants based on information stored in said database.

20. The method of claim 17 wherein said conference participants receive said multicast traffic from said multicast network via a multicast enabled router.

21. The method of claim 17 wherein said conference participants receive said multicast traffic from said multicast network via a gateway server connected to a multicast enable router.

22. The method of claim 17 further including the step of dynamically creating a session description protocol file from information stored in said database pertaining to said conferencing session.

23. The method of claim 22 further including the step of launching a viewer application via said user interface for transmitting said multicast traffic.
